# EUROPÄISCHE PATENTANMELDUNG

(11) **EP 0 642 736 A1**
(43) Veröffentlichungstag der Anmeldung: **15.03.1995**
(21) Anmeldenummer: 93890179.0
(22) Anmeldetag: 10.09.1993
(51) Int. Cl.: A21B 7/00, B01F 15/04, B65B 43/56

(54) **Zutatensammler zum Einsammeln einzelner Zutaten für eine gemeinsame Weiterverwertung**

(71) Anmelder: Hemetsberger, Helmut, A-4690 Schwanenstadt (AT)
(72) Erfinder: Hemetsberger, Helmut, A-4690 Schwanenstadt (AT)
(74) Vertreter: Hübscher, Heiner, Dipl.-Ing.

(57) **Zusammenfassung**

Ein Zutatensammler (1) zum Einsammeln einzelner Zutaten für eine gemeinsame Weiterverwertung umfaßt eine Behälterreihe (2) zur Aufnahme der verschiedenen Zutaten und einen der Behälterreihe (2) entlang auf Laufschienen (7) verfahrbaren Sammelwagen (4) zum Übernehmen der Zutaten, wobei jeder Behälter (3) der Behälterreihe (2) eine Ausgabeeinrichtung (6) besitzt und der Sammelwagen (4) wahlweise an der Ausgabeeinrichtung (6) jeweils eines Behälters (3) anhaltbar ist.

Um mit möglichst einfachen konstruktiven Mitteln das Einsammeln von Zutaten zu ermöglichen, weist der Sammelwagen (4) einen in einer Richtung wirkenden Schwerkraft- und/oder Federkraftantrieb (13; 14; 18) auf und ist an den Laufschienen (7) im Bereich jedes Behälters (3) eine Rastvorrichtung (8) zum Anhalten des Sammelwagens (4) vorgesehen.

## Beschreibung

Die Erfindung bezieht sich auf einen Zutatensammler zum Einsammeln einzelner Zutaten für eine gemeinsame Weiterverwertung, mit einer Behalterreihe zur Aufnahme der verschiedenen Zutaten und einem der Behalterreihe entlang auf Laufschienen verfahrbaren Sammelwagen zum Übernehmen der Zutaten, wobei Jeder Behälter der Behälterreihe eine Ausgabeeinrichtung besitzt und der Sammelwagen wahlweise an der Ausgabeeinrichtung jeweils eines Behälters anhaltbar ist.

Solche Zutatensammler werden beispielsweise im Rahmen einer Teigbereitungsmaschine eingesetzt und erlauben in Abhängigkeit von der jeweiligen Rezeptur das Sammeln der jeweils gewünschten Zutaten, die dann gemeinsam der vorbereiteten Teigmasse od. dgl. zugegeben werden können. Dazu sind die verschiedenen Zutaten in aneinandergereihten Behältern eingefüllt und werden über die Jeweilige Ausgabeeinrichtung dieser Behälter dosiert in den Sammelwagen abgegeben, welcher Sammelwagen meist mit einer elektronischen Waage ausgestattet ist, die aber eine geeignete Steuerungseinrichtung die Ausgabeeinrichtungen der Behälter so ansteuert, daß eine vorbestimmte, durch die Waage des Sammelwagens erfaßbare Zutatenmenge dosiert aus dem Jeweiligen Zutatenbehälter in den Sammelwagen abgefüllt werden kann. Der Sammelwagen muß dazu die jeweils erforderliche Position im Bereich der Ausgabeeinrichtung des gewählten Behälters anfahren und die abgegebene Menge übernehmen, was vorzugsweise durch die einfache Zuordnung einer Auslauföffnung der Ausgabeeinrichtungen der Behälter einerseits und einer entsprechenden Auffangschale des Sammelwagens anderseits erfolgt. Die bekannten Sammelwagen sind nun zum positionsgerechten Verfahren entlang der unterhalb der Behälterreihe verlegten Laufschienen mit eigenen Schritt- motoren und entsprechenden Steuerungseinrichtungen ausgerüstet, wodurch ein beträchtlicher Bau- und Investitionsaufwand in Kauf zu nehmen ist und die Funktionssicherheit von der Sorgfalt der Betreuung abhängt.

Der Erfindung liegt daher die Aufgabe zugrunde, einen Zutatensammler der eingangs geschilderten Art zu schaffen, der auf besonders einfache und robuste Weise ein störunanfälliges Zutatensammeln gewährleistet.

Die Erfindung löst diese Aufgabe dadurch, daß der Sammelwagen einen in einer Richtung wirkenden Schwerkraft- und/oder Federkraftantrieb aufweist und an den Laufschienen im Bereich jedes Behälters eine Rastvorrichtung zum Anhalten des Sammelwagens vorgesehen ist. Zum Einsammeln der verschiedenen Zutaten bedarf es daher keines aufwendigen Motorantriebes mehr, sondern der Sammelwagen fährt in einer Richtung von Behälter zu Behälter, wobei über die Rastvorrichtung der Wagen an den Behältern angehalten wird, aus denen entsprechende Zutaten übernommen werden sollen. Ist die Behälterreihe abgefahren, befinden sich auch alle gewünschten Zutaten im Sammelwagen und können abgeholt werden. Für den nächsten Sammelvorgang braucht dann nur der Sammelwagen vom die Maschine bedienenden Personal händisch in die Ausgangsposition zurückgebracht zu werden und der Sammler ist für den nächsten Sammelvorgang bereit. Da zur Betreuung der Maschine ohnehin Personal vorhanden ist, bedeutet das händische Zurückbewegen des Sammelwagens einen unbedeutenden Handgriff, der aber aufwendige maschinelle Einrichtungen einspart. Selbstverständlich kann unabhängig vom eigentlichen Wagenantrieb der Sammelwagen mit allen gewünschten und erforderlichen Zusatzeinrichtungen, wie Waagen oder andere Meßeinrichtungen, Positionskontrolleinrichtungen u. dgl., ausgestattet sein und auch das Zusammenwirken dieser Wageneinrichtungen mit der Maschinensteuerungseinrichtung bleibt vollkommen unbeeinträchtigt.

Eine besonders einfache Ausführungsmöglichkeit eines Schwerkraftantriebes ergibt sich, wenn der Sammelwagen auf schräg abwärts verlegten Laufschienen verfahrbar ist, da so das Eigengewicht des Wagens den Antrieb mit sich bringt. Zweckmäßigerweise wird dabei der Wagen ein der Schienenschräge angepaßtes schräges Fahrgestell aufweisen, wodurch der Auffangbehälter oder die Waage u. dgl. ordnungsgemäß horizontal ausgerichtet sind.

Abgesehen von einer einfachen Schrägstellung der Laufschienen können für den Sammelwagen ein Seilzug, dessen über Umlenkrollen geführtes Zugseil einerends ein Zuggewicht aufnimmt und andernends am Sammelwagen angreift, oder ein Federzug, der ein über eine Spannfeder federbelastbares, am Sammelwagen angreifendes Zugseil aufweist, vorgesehen sein, so daß der Wagen auch bei horizontal verlaufenden Schienen angetrieben werden kann. Seil- und Federzug erlauben außerdem eine einfache Anpassung der Antriebsleistung an die jeweiligen Gegebenheiten.

Als Rastvorrichtungen zum Positionieren des Sammelwagens könnten an sich im Bereich jedes Behälters für sich betätigbare Schienensperren u. dgl. vorbereitet sein, doch ist es besonders vorteilhaft, wenn die Laufschienen als Rastvorrichtungen Positionierkerben aufweisen, denen am Sammelwagen eine einen elektromagnetisch betätigbaren Positionierkeil umfassende Bremseinrichtung zugeordnet ist. Es genügt diese eine Bremseinrichtung, die zusammen mit den Positionierkerben ein sicheres Anhalten des Sammelwagens an den gewünschten Positionen erlaubt. Dazu ist lediglich der Positionierkeil in Raststellung zu bringen, so daß er in die jeweilige Positionierkerbe eingreift und den Wagen blockiert. Ein Zurückziehen des Positionierkeiles in eine Freigabestellung führt dann zum Weiterfahren des Wagens.

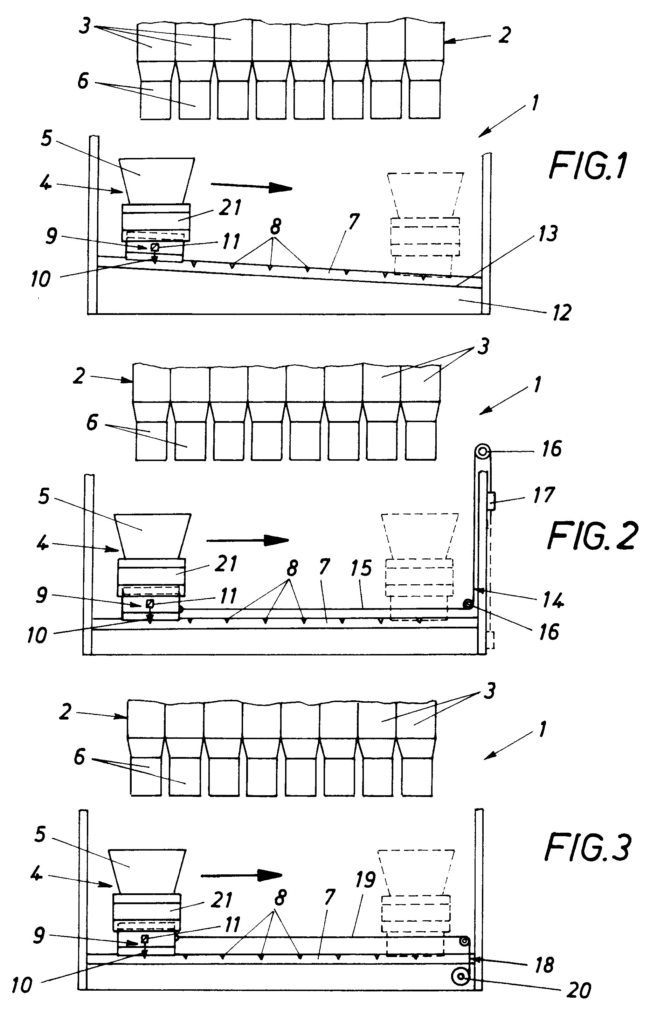

In der Zeichnung ist der Erfindungsgegenstand beispielsweise näher veranschaulicht, und zwar zeigen
- Fig. 1 bis 3: drei Ausführungsbeispiele eines erfindungsgemäßen Zutatensammlers jeweils in schematischer Seitenansicht.

Ein Zutatensammler 1 umfaßt eine Behälterreihe 2 aus einzelnen Behältern 3 zur Aufnahme verschiedener Zutaten und einen unterhalb der Behälterreihe 2 verfahrbaren Sammelwagen 4 mit einer Auffangschale 5 zur Übernahme der einzelnen Zutaten. Jeder Behälter 3 ist mit einer eigenen Ausgabeeinrichtung 6 ausgestattet und der Sammelwagen kann jeweils unter der Ausgabeeinrichtung 6 der Behälter 3 angehalten werden. Dazu sind an den Laufschienen 7 für den Sammelwagen 4 im Bereich jedes Behälters 3 Positionierkerben 8 als Rastvorrichtungen vorgesehen, mit denen eine Bremseinrichtung 9 des Sammelwagens 4 zusammenwirkt. Diese Bremseinrichtung 9 besteht aus einem federbelasteten Positionierkeil 10, der über einen Elektromagneten 11 aus seiner Raststellung in eine zurückgezogene Freigabestellung bewegbar ist.

Als Antrieb für den Sammelwagen 4 ist ein Schwerkraft- oder Federkraftantrieb vorgesehen, der den Sammelwagen 4 in einer Richtung der Behälterreihe 2 entlang bewegt. In der anderen Richtung muß daher der Wagen händisch in seine Ausgangsposition zurückgebracht werden.

Als Schwerkraft- und/oder Federkraftantrieb weist, wie im Ausführungsbeispiel nach Fig. 1 angedeutet, das Traggestell 12 des Zutatensammlers eine schräge Stützfläche 13 zum Verlegen der Laufschienen 7 auf, so daß der Sammelwagen 4 allein aufgrund seines Eigengewichtes auf den Laufschienen 7 abfährt.

Gemäß dem Ausführungsbeispiel nach Fig. 2 ist ein Seilzug 14 als Wagenantrieb vorgesehen, wobei ein Zugseil 15, das über geeignete Umlenkrollen 16 geführt ist, einerends am Sammelwagen 4 angreift und andernends ein Zuggewicht 17 trägt, durch welches Zuggewicht 17 daher der Sammelwagen 4 auch auf einer horizontal verlegten Laufschiene 7 gezogen werden kann.

Beim Ausführungsbeispiel nach Fig. 3 ist statt eines Seilzuges ein Federzug 18 als Wagenantrieb vorgesehen, dessen am Sammelwagen 4 angreifendes Zugseil 19 über eine Spannfeder 20 eingezogen wird und dabei den Sammelwagen 4 den Schienen entlang vorwärtsbewegt.

Zum Einsammeln verschiedener Zutaten wird der Sammelwagen 4 aus seiner Ausgangsstellung an einem Ende der Behälterreihe 2 der Behälterreihe 2 entlang verfahren, wobei der federbelastete Positionierkeil 10 der Bremseinrichtung 9 in die aufeinanderfolgenden Positionierkerben 8 einrastet. Soll vom jeweils zugehörigen Behälter 3 eine Zutat übernommen werden, bleibt der Wagen 4 positioniert, bis die genügende Zutatenmenge aus der Ausgabeeinrichtung 6 in die Auffangschale 5 ausgeflossen ist, was beispielsweise durch eine am Wagen 4 aufgesetzte Waage 21 erfaßt wird. Nach dem Abfüllen der Zutat hebt der eingeschaltete Elektromagnet 11 den Positionierkeil 10 aus der Positionierkerbe heraus und der Sammelwagen 4 kann zur nächsten Position abfahren, wo wiederum ein Verrasten erfolgt. Je nach dem, ob aus den jeweils zugehörenden Behältern Zutaten entnommen werden sollen oder nicht, bleibt der Sammelwagen in der jeweiligen Position oder fährt zur nächsten weiter, wobei die entsprechenden Steuerungen über eine nicht weiter dargestellte Steuerungseinrichtung erfolgen, die nicht nur für das mengenrichtige Ausgeben der Zutaten sorgt, sondern auch das Anhalten des Sammelwagens 4 an den jeweils richtigen Abgabepositionen gewährleistet.

## Patentansprüche

1. Zutatensammler (1) zum Einsammeln einzelner Zutaten für eine gemeinsame Weiterverwertung, mit einer Behälterreihe (2) zur Aufnahme der verschiedenen Zutaten und einem der Behälterreihe (2) entlang auf Laufschienen (7) verfahrbaren Sammelwagen (4) zum Übernehmen der Zutaten, wobei jeder Behälter (3) der Behälterreihe (2) eine Ausgabeeinrichtung (6) besitzt und der Sammelwagen (4) wahlweise an der Ausgabeeinrichtung (6) jeweils eines Behälters (3) anhaltbar ist, dadurch gekennzeichnet, daß der Sammelwagen (4) einen in einer Richtung wirkenden Schwerkraft- und/oder Federkraftantrieb (13; 14; 18) aufweist und an den Laufschienen (7) im Bereich jedes Behälters (3) eine Rastvorrichtung (8) zum Anhalten des Sammelwagens (4) vorgesehen ist.

2. Zutatensammler nach Anspruch 1, dadurch gekennzeichnet, daß der Sammelwagen (4) auf schräg abwärts verlegten Laufschienen (7) verfahrbar ist.

3. Zutatensammler nach Anspruch 1, dadurch gekennzeichnet, daß für den Sammelwagen (4) ein Seilzug (14) vorgesehen ist, dessen über Umlenkrollen (16) geführtes Zugseil (15) einerends ein Zuggewicht (17) aufnimmt und andernends am Sammelwagen (4) angreift.

4. Zutatensammler nach Anspruch 1, dadurch gekennzeichnet, daß für den Sammelwagen (4) ein Federzug (18) vorgesehen ist, der ein über eine Spannfeder (20) federbelastbares, am Sammelwagen (4) angreifendes Zugseil (19) aufweist.

5. Zutatensammler nach einem der Ansprüche 1 - 4, dadurch gekennzeichnet, daß die Laufschienen (7) als Rastvorrichtungen Positionierkerben (8) aufweisen, denen am Sammelwagen (4) eine einen elektromagnetisch betätigbaren Positionierkeil (10, 11) umfassende Bremseinrichtung (9) zugeordnet ist.
